# EUROPEAN PATENT APPLICATION

(11) **EP 4 249 302 A1**
(43) Date of publication of application: **27.09.2023**
(21) Application number: 23161313.4
(22) Date of filing: 10.03.2023
(51) Int. Cl.: B60K 6/445, B60W 10/06, B60W 10/08, B60W 20/20, B60W 20/10

(54) **SYSTEM AND METHOD OF CONFIGURATION OF A CONTROL PROCESSING UNIT OF A HYBRID TRANSMISSION**

(30) Priority: 21.03.2022 IT 202200005537
(71) Applicant: Iveco S.p.A., 10156 Torino (IT)
(72) Inventor: MONI, Manuele, 10156 Torino (IT)
(74) Representative: Fiume, Orazio

(57) **Abstract**

Metodo di configurazione di un'unità di elaborazione di controllo di una trasmissione ibrida comprendente un motore a combustione interna, almeno un motore elettrico di propulsione e mezzi per gestire la connessione selettiva del motore a combustione interna e/o del motore elettrico alia trasmissione, in cui l'unità di elaborazione è configurata per simulare un microprocessore (CPU) comprendente una memoria (Lookup Table Memory) in cui è memorizzata una tabella (Tab 1) delle transizioni, in cui in ciascuna cella è indicata una sequenza di identificativi, ciascun identificativo indicando una operazione (Task) da eseguire.

## Description

### Field of the invention

The present invention relates to the field of methods for configuring a processing unit of a hybrid transmission.

### State of the art

In hybrid vehicles, there are several drive units. For example, in the "Prius" propulsion system there is a thermal engine and two electric motor generators arranged to cooperate in the propulsion of the vehicle and/or in recharging the vehicle batteries.

According to some documents released, the "Prius" scheme can provide multiple operation modes.

The control unit, for each variation of the transmission configuration, must verify the correct execution of a sequence of operations and inhibit a further variation of the configuration when the execution of the sequence of a previous variation is not completed.

Events may also occur that prevent a configuration change from being completed. One can consider, for example, the activation of the internal combustion engine while the driver is forced to brake suddenly, bringing the vehicle suddenly to a speed lower than that of activation of the internal combustion engine.

Currently, the behaviour of the processing unit is defined through a capabilities document containing each sequence of operations and determined through the production of a deterministic code which is subsequently loaded into the processing unit.

The deterministic code proposes the finite state machines necessary to manage the transmission transitions between different configurations (e.g. from full electric with one engine to parallel hybrid with the others).

However, if a problem is encountered during the test drive or if the functionality document is modified, for example by changing the possible transitions, it becomes necessary to modify the deterministic code with an enormous consumption of time.

In addition, the growing number of components that define the transmission greatly complicates the programming of the control unit that oversees the transmission. In fact, where it is necessary to monitor engagements, clutches, relative speeds between gears and applied torques, etc., it is desirable to find a simpler and faster way to program a processing unit that supervises the functions of a hybrid transmission.

Unless specifically excluded in the detailed description that follows, what is described in this chapter is to be considered as an integral part of the detailed description.

### Summary of the invention

The subject of the present invention is to present a system and method for configuring a control processing unit of a hybrid transmission.

The basic idea of the present invention is to generate software executed on the processing unit, which simulates the operation of a microprocessor circuit architecture suitably programmed for the control of the hybrid transmission.

Advantageously, the operation of programming the processing unit requires, as described below, the preparation of a spreadsheet representing the program executed by the simulated microprocessor. Thus, a processing unit programming change boils down to a quick spreadsheet change.

In other words, it is not necessary to directly design the finite state machines necessary to manage the transitions of the transmission between different configurations (e.g. from full electric with one motor to hybrid parallel with the others) but it is sufficient to simulate a microprocessor. Advantageously, the control software which is loaded into the hardware processing unit forms a "soft processor", i.e. a virtual processor characterized by a memory containing the sequence of operations necessary for each transmission transition. However, to change the behavior of the soft processor, it is sufficient to change the memory contents and not the processor model.

In other words, the programming operations of the hybrid transmission control processing unit do not involve the creation of deterministic code, but only the preparation of a spreadsheet.

From a hardware point of view, the transmission control unit is not configured to simply perform operations, but is configured to simulate a software microprocessor that performs a sequence of operations loaded into the virtual memory of the software processor.

The dependent claims describe preferred variants of the invention, forming an integral part of the present description.

### Brief description of the figures

Further objects and advantages of the present invention will become clear from the detailed description that follows of an embodiment of the same (and of its variants) and from the annexed drawings given for purely explanatory and non-limiting purposes, in which:
Fig. 1 shows a model-base design simulation diagram of the control processing unit of a hybrid transmission;

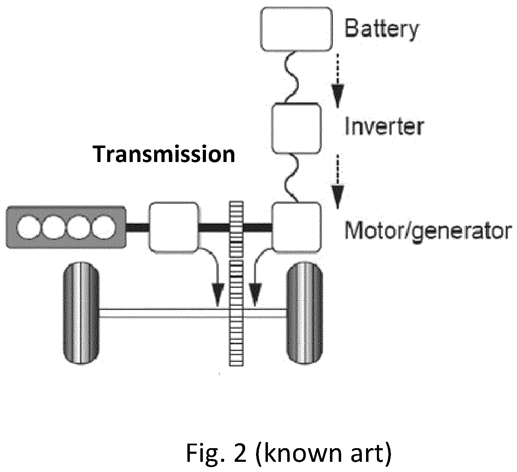

Fig. 2 shows an example of a hybrid transmission of the known art whose control unit is programmed by means of the present invention.

The same reference numbers and letters in the figures identify the same elements or components or functions.

It should also be noted that the terms "first", "second", "third", "superior", "inferior" and the like may be used herein to distinguish various items. These terms do not imply a spatial, sequential, or hierarchical order for the modified items unless specifically indicated or inferred from the text.

The elements and features illustrated in the various preferred embodiments, including the drawings, can be combined with each other without however departing from the scope of protection of the present application as described below.

### Detailed description

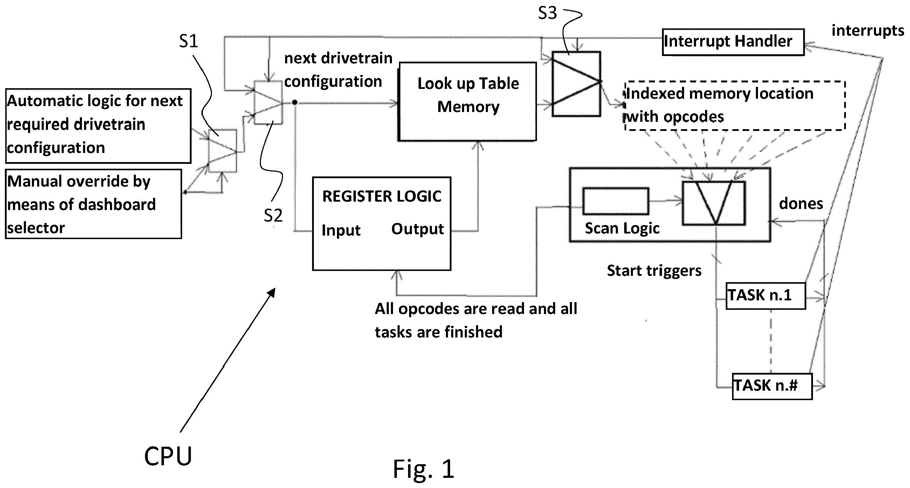

Fig. 1 shows the representative model-base design diagram of the virtual or software microprocessor.

The model-based diagrams are widely known to the person skilled in the art mainly thanks to the Simulink^{®} simulation software environment of Matlab^{®}.

However, using model-base design programming is entirely optional. What matters is to simulate a microprocessor circuit configured to receive the table described below as input.

The diagram has as inputs a manual input, which can be, for example, made by means of a selector placed on the dashboard of the vehicle or an automatic decision-making system, for example, a processing unit or another function SW performed on the same control processing unit implementing the present invention, which for example is optimized to decide the operating mode of the transmission to reduce consumption or to maximize the driving torque, or to recharge the propulsion batteries and which therefore establishes the most suitable transmission configuration according to certain operating parameters and operating conditions of the vehicle.

The ways in which the calculation unit or the software module determines the optimal operating configuration of the transmission are not the object of the present invention and can be any.

Selector S1 is arranged so as to give priority to the manual selector.

Selector S2 is arranged in cascade to selector S1. This has as its first input the output of selector S1 and the output of a block called "Interrupt Handler".

The Interrupt Handler is a component or module arranged to monitor the correct execution of state transitions and to interrupt them under certain circumstances. This module is described in detail below.

As the manual selector takes precedence over the automatic decision making system, the Interrupt Handler takes precedence over any command received from the S1 selector. The "Lookup Table Memory" block represents the static and modifiable memory of the microprocessor. It is arranged immediately downstream of the selector S2. Each location or memory cell contains the identifiers of the task to be performed, operating codes, for passing from the current transmission configuration to a new configuration.

In other words, it is at least a look up table arranged to indicate the sequence of operations to be performed to pass from one state to another state.

An additional block "INDEXED MEMORY LOCATION WITH THE OPCONDES" is shown. This block is a software module or component placed downstream of the look up table and is optional. It translates the identifiers or symbols contained in the look up table into corresponding operations indicated below as TASK n.1,..., TASK n.#. The translation of the identifiers can be performed directly in the look up table by means of a more complex memory structure, for example based on pointers, and known to the person skilled in the art.

The block "SCAN LOGIC" represents a software component or module that reads the so-called "opcodes", i.e. the outputs of the lookup table memory to generate the start triggers for the management tasks of the transmission hardware components, such as, for example, the actuators of the clutches to engage/disengage the propulsion motors.

The "SCAN LOGIC" block, for each task in the sequence
- Commands the start of the execution of the task,
- Waits for its execution and after verifying its correct execution,
- Marks the task as done.

Whenever a transition from one operating configuration to another is judged as concluded, the SCAN LOGIC block "informs" the "REGISTER LOGIC" block. This latter block has a first input coinciding with the second selector S2, a second input coinciding with the output of the "SCAN LOGIC" block and an output connected to the Lookup Table Memory. In other words, the Register Logic block is in parallel with the Look up table.

It acts as a register, to update the current state of the transmission operating configuration when all transition operations have been completed. The input of this block is the next state, indicated by the second selector S2, and the output is the current state which represents one of the possible configurations of the transmission.

In other words, when the selector S2 supplies a new configuration to the lookup table memory, the transition must necessarily be selected on the basis of the current operating configuration of the transmission. This current operating configuration is provided by the Register Logic. Returning now to the Interrupt Handler, this block has a first output connected to the second selector S2 to "override" the requests arriving from the first selector S1; a second output connected to a third selector S3 arranged between the output of the Lookup table memory and the Scan Logic and inputs connected to a hardware/software interface capable of monitoring the execution of operations and other signals such as, for example,
- the speed of the vehicle,
- Service brake activation status,
- Parking brake activation status,
- The connection status of the vehicle to a charging source,
- Etc...

This block is configured to override commands that arrive to the lookup table memory and the SCAN LOGIC block, when a stop condition occurs that impedes a transition between two operating conditions from executing or impedes its complete execution.

Such a stop condition can consist of
- A fault detected on an actuator which does not allow reaching the new operating configuration,
- A change in the operating conditions of the vehicle,
- A variation of vehicle control.

In the event of an actuator failure, the interrupt handler interrupts the flow of commands from selector S1 to SCAN LOGIC, forcing a return to the previously set operating configuration.

An example of a variation in the operating conditions of the vehicle may consist, for example, in a sudden variation of the resistant torque, for example due to an ascent or descent.

An example of a change in vehicle control may consist of a sudden change in vehicle speed, for example due to sudden braking or sudden acceleration.

Advantageously, the described scheme simulates the behavior of a microprocessor in which the (re)programmable portion is only the look up table memory which is described in detail below by means of table 1:

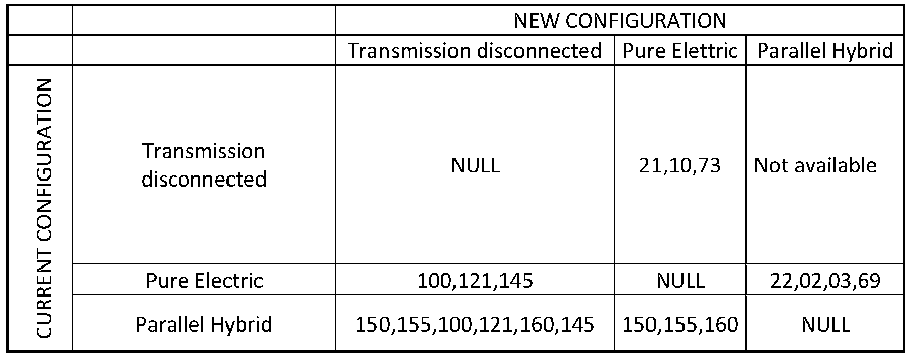

The first column shows the current configurations:
- Transmission disconnected
- Pure electric
- Parallel hybrid

The first row shows the "new" configurations:
- Transmission disconnected
- Pure electric
- Parallel hybrid

It is evident that if the current configuration and the new one coincides, then, there is no change procedure to be performed and therefore the major diagonal is formed by cells set to "NULL".

The other cells of the table include a sequence of identifiers separated by a separator, for example a comma. Each identifier corresponds to an operation to be performed and the order of the identifiers corresponds to the ordered sequence of operations to be performed.

**Table 2 below shows an example of identifier translator:**

| **Operation ID** | **Operation to be performed** |
|---|---|
| 21 | Switching on the propulsion inverter |
| 10 | Closing of the clutch of the electric motor |
| 73 | Activation of the traction control as a function of the position of the accelerator pedal |
| 22 | Turning on the internal combustion engine |
| 2 | Synchronization of the revolutions of the internal combustion engine with the rotational speed of the transmission gearbox |
| 3 | Closing of the clutch of the internal |
| | combustion engine |
| 69 | Distributing the torque between the electric motor and the internal combustion engine |
| 100 | Cancelling the torque delivered by the electric motor |
| 121 | Opening the electric motor clutch |
| 145 | Turning off the propulsion inverter |
| 150 | Putting the internal combustion engine to idle |
| 155 | Opening the internal combustion engine clutch |
| 160 | Turning off the internal combustion engine |

It is evident that the identifiers can vary according to the hardware configuration of the transmission and the multiple configuration possibilities.

In a cell of table 1 it is indicated: "not feasible".

This indication means that there are no identifiers, as the transition from the current configuration to the new configuration is not possible or is not available.

For example, if the engagement of the internal combustion engine does not involve slip, then it is not possible to pass from the NULL configuration or from a low speed condition to the condition of connecting the internal combustion engine to the transmission, as this would lead to turn off the heat engine.

The present invention can advantageously be implemented through a computer program comprising coding means for carrying out one or more steps of the method, when this program is executed on a computer. Therefore it is understood that the scope of protection extends to said computer program and also to computer-readable means comprising a recorded message, said computer-readable means comprising program coding means for carrying out one or more steps of the method, when said program is run on a computer.

Variants of the non-limiting example described are possible, without however departing from the scope of protection of the present invention, including all equivalent embodiments for a person skilled in the art, to the contents of the claims.

From the description given above, the person skilled in the art is capable of realizing the object of the invention without introducing further constructive details.

## Claims

1. A method for configuring a control processing unit of a hybrid transmission of a vehicle comprising an internal combustion engine, at least one electric propulsion motor and means for managing the selective connection of the internal combustion engine and/or the electric motor to the hybrid transmission, wherein the processing unit is configured to simulate a microprocessor (CPU) comprising a static Lookup Table Memory wherein a table (Tab 1) of the transitions is stored, wherein a sequence of identifiers is indicated in each cell relating to a transition between two operating modes of the hybrid transmission, wherein each identifier indicates an operation (Task) to be performed.

2. Method according to claim 1, wherein said microprocessor is configured so as to comprise a first software module (SCAN LOGIC) configured, for each task (Task) of the sequence, for
- Commanding the start of the task,
- awaiting for the execution of the task and after verifying the correct execution of the task,
- Indicating the task as executed,
and wherein said first software module is configured to return the complete execution of each sequence.

3. Method according to claim 1 or 2, wherein said microprocessor is configured so as to comprise a third software module (REGISTER LOGIC) configured to receive as input a request for a new transmission operating mode and to provide the memory with the current operating mode of the transmission.

4. Method according to any one of claims 1 - 3, wherein said microprocessor is configured so as to comprise a fourth software module (Interrupt handler) arranged to monitor the execution of each operation (Task) of the sequence and to override the commands for changing the transmission operating mode, when a condition of shutdown that prevents execution or completion of execution of a transition between two different operating modes.

5. Computer program comprising program coding means configured for carrying out a simulation of a microprocessor according to any one of claims 1 to 4, when said program is run on a control processing unit of a vehicular transmission.

6. Computer readable means comprising a recorded program, said computer readable means comprising program coding means configured to simulate a microprocessor according to any one of claims 1 to 4, when said program is run on a unit control processing of a vehicular transmission.

7. Hybrid transmission of a vehicle comprising an internal combustion engine, at least one electric propulsion motor and means for managing the selective connection of the internal combustion engine and/or the electric motor to the transmission, at least one electric motor and means for managing the selective connection of the internal combustion engine and/or electric motor to the hybrid transmission, wherein the hybrid transmission further comprises a processing unit to manage transitions between operating modes of the hybrid transmission, wherein the processing unit is configured to simulate a microprocessor (CPU) comprising a memory (Lookup Table Memory) where a table (Tab 1) of the transitions between said operating modes is stored, wherein each cell indicates a sequence of identifiers relating to a transition between two operating modes, each identifier indicating an operation (Task) to be performed.

8. Transmission according to claim 7, wherein said microprocessor is configured so as to comprise a first software module (SCAN LOGIC) configured, for each task (Task) of the sequence, to
- Command the start of the execution of the task,
- wait for the execution of the task and after verifying the correct execution of the task,
- Indicate the task as executed,
and wherein said first software module is configured to return the complete execution of each sequence.

9. Transmission according to claim 7 or 8, wherein said microprocessor is configured so as to comprise a third software module (REGISTER LOGIC) configured to receive as input a request for a new transmission configuration and to provide the memory with the current configuration of the transmission.

10. Method according to any one of claims 7 - 9, wherein said microprocessor is configured so as to comprise a fourth software module (Interrupt handler) arranged to monitor the execution of each operation (Task) of the sequence and to overcome the transmission configuration variation, when a stop condition occurs that prevents execution or completion of execution of a transition between two operating conditions.

11. A vehicle comprising a hybrid transmission according to any one of claims 7 to 10.
